# EUROPEAN PATENT APPLICATION

(11) **EP 4 668 150 A1**
(43) Date of publication of application: **24.12.2025**
(21) Application number: 24777498.7
(22) Date of filing: 31.01.2024
(51) Int. Cl.: G06F 21/71, G06F 21/81

(54) **TERMINAL AND PERIPHERAL SYSTEM THEREOF**

(30) Priority: 31.03.2023 CN 202320792723 U
(71) Applicant: Huawei Technologies Co., Ltd., Shenzhen, Guangdong 518129 (CN)
(72) Inventor: WANG, Fangcheng, Shenzhen, Guangdong 518129 (CN); CHEN, Long, Shenzhen, Guangdong 518129 (CN); CHEN, Jian, Shenzhen, Guangdong 518129 (CN); LIU, Cheng, Shenzhen, Guangdong 518129 (CN)
(74) Representative: Grünecker Patent- und Rechtsanwälte PartG mbB
(86) International application number: PCT/CN2024/074946
(87) International publication number: WO 2024/198704

(57) **Abstract**

This application provides a terminal and a peripheral system thereof. The peripheral system includes an input module, a processing module, and a plurality of peripheral modules. The input module is connected to the processing module. The input module is configured to receive input information and transmit the input information to the processing module. The processing module is connected to the plurality of peripheral modules. The processing module includes a hardware security unit. The hardware security unit is configured to: receive the input information and output a control signal corresponding to the input information to a part or all of the peripheral modules, to control communication statuses, power supply statuses, and/or startup statuses of the part or all of the peripheral modules. Therefore, when the peripheral modules are controlled to be disconnected from communication, powered off, and/or not in operation, a third-party app on the terminal cannot access or invoke the peripheral modules, and cannot steal personal privacy information.

## Description

This application claims priority to Chinese Patent Application No. 202320792723.4, filed with the China National Intellectual Property Administration on March 31, 2023 and entitled "TERMINAL AND PERIPHERAL SYSTEM OF THEREOF", which is incorporated herein by reference in its entirety.

### TECHNICAL FIELD

This application relates to the field of terminal technologies, and in particular, to a terminal and a peripheral system thereof.

### BACKGROUND

With development of terminal devices such as mobile phones, applications (Applications, APPs) installed on the terminals become increasingly diverse. However, there is a security risk in a non-native system app on a terminal, namely, a third-party app. For example, a third-party app may invoke peripherals such as a camera or a microphone in the terminal through a background, to steal personal privacy information of a user.

Currently, a pure-software protection solution is usually used to protect the peripherals. In the pure-software protection solution, peripherals that need protection are deployed under a processor core, and underlying security software of the processor core is used for authentication, to defend against unauthorized access to the peripherals by the third-party app. However, the security software is prone to security vulnerability. Therefore, the pure-software protection solution is susceptible to being deceived and bypassed by the third-party app, resulting in a low security level. In addition, frequent interaction required between the security software and a peripheral driver complicates an authentication manner. Therefore, it is difficult to implement the pure-software protection solution.

### SUMMARY

In view of this, this application provides a terminal and a peripheral system thereof, effectively defending, by using hardware, against unauthorized access to or invocation of a peripheral by a third-party app, and avoiding leakage of personal privacy information. Therefore, a security level is high.

According to a first aspect, this application provides a peripheral system of a terminal. The peripheral system includes an input module, a processing module, and a plurality of peripheral modules. The input module is connected to the processing module. The input module is configured to receive input information and transmit the input information to the processing module. The processing module is connected to the plurality of peripheral modules. The processing module includes a hardware security unit. The hardware security unit is configured to: receive the input information and output a control signal corresponding to the input information to a part or all of the peripheral modules, to control communication statuses, power supply statuses, and/or startup statuses of the part or all of the peripheral modules.

Based on this design, when the peripheral modules are controlled to be disconnected from communication, powered off, and/or not in operation, even if a third-party app on the terminal deceives and bypasses software protection, the third-party app cannot access or invoke the peripheral modules. Therefore, the peripheral system of the terminal in this application can effectively avoid leakage of personal privacy information due to unauthorized access to or invocation of the peripheral modules by the third-party app. In addition, in this application, the control signal is generated by the hardware security unit, to implement hardware anti-tampering and anti-intrusion protection. This implements hardware security protection. Therefore, the terminal and the peripheral system in this application have a high security level. In comparison with a common pure-software protection solution, in this application, a hardware structure is used to defend against unauthorized access to and unauthorized invocation of the peripheral. Therefore, security protection for the peripheral module in this application is simpler and easier to implement. Therefore, an application scope may be wider.

In a possible design, at least one of the peripheral modules includes peripheral hardware and a protection switch, the protection switch is connected between the peripheral hardware and the processing module, and the hardware security unit is connected to the protection switch. Based on this design, the hardware security unit may output a control signal to the protection switch, to control an on/off state of the protection switch, so that a communication status of the peripheral hardware can be controlled.

In a possible design, each protection switch is connected to at least two pieces of peripheral hardware of a same type. This can reduce a quantity of components, costs, and control complexity.

In a possible design, the peripheral system further includes a power supply, and the power supply is connected to the processing module and the plurality of peripheral modules, to supply power to the processing module and the plurality of peripheral modules. At least one of the peripheral modules includes peripheral hardware and a protection switch, the protection switch is connected between the peripheral hardware and the power supply, and the hardware security unit is connected to the protection switch. Based on this design, the hardware security unit may output the control signal to the protection switch, to control an on/off state of the protection switch, so that a power supply status of the peripheral hardware can be controlled.

In a possible design, the peripheral system further includes a first power supply and a second power supply, the first power supply is connected to the processing module and is configured to supply power to the processing module, the second power supply is connected to the plurality of peripheral modules and the hardware security unit, the second power supply is configured to supply power to the plurality of peripheral modules. Based on this design, the hardware security unit may output a control signal to the second power supply, to control operation of the second power supply, so that a power supply status of the peripheral module can be controlled.

In a possible design, the processing module has an enable interface and/or a reset interface, at least one of the peripheral modules is connected to the enable interface and/or the reset interface. Based on this design, the hardware security unit may output the control signal to the peripheral module through the enable interface, to enable the peripheral module (that is, enable the peripheral module to start) or disable the peripheral module (that is, prevent the peripheral module from starting), thereby controlling a startup status of the peripheral module. Alternatively, the hardware security unit may further output the control signal to the peripheral module through the reset interface, to reset the peripheral module (that is, enable the peripheral module to end a current state and enter a reset wait state, for example, enable the peripheral module to change from an operating state to a reset wait state) or not reset the peripheral module (that is, enable the peripheral module to maintain a current state, for example, enable the peripheral module to continue to operate), thereby controlling a startup status of the peripheral module.

In a possible design, the processing module further includes a processing unit. The processing unit is configured to process data of the plurality of peripheral modules, so that the plurality of peripheral modules can implement corresponding functions. The hardware security unit includes a first security unit. The first security unit may implement hardware-level security protection, and may defend against attacks and tampering. In addition, another part of the processing module, an app, and the like cannot actively access and obtain information in the first security unit. Therefore, the first security unit may securely generate a control signal and transmit the control signal to the part or all of the peripheral modules. The first security unit is connected to the processing unit and is integrated with the processing unit into a system on chip SOC. Therefore, the first security unit and the processing unit may communicate with each other, so that after the first security unit controls the communication statuses, the power supply statuses, and/or the startup statuses of the peripheral modules, the processing unit may learn of the communication statuses, the power supply statuses, and/or the startup statuses of the peripheral modules.

In a possible design, the hardware security unit further includes a second security unit, and the second security unit is disposed outside the SOC and is connected to the first security unit. Based on this design, the second security unit may be configured to store information (such as sensitive information such as a key, identity information, and permission) used when the first security unit generates a control signal corresponding to input information. Clearly, physical (that is, hardware) isolation can be implemented by using the second security unit, so that storage security of the sensitive information can be further enhanced, and hardware security can be improved.

In a possible design, the first security unit is a trusted execution environment TEE or a processor in the SOC. It may be understood that when the first security unit is a TEE, it is equivalent to isolating a security area in the SOC, to implement isolation from another part of the processing module. When the first security unit is a processor, the first security unit may be physically (that is, hardware) independent, and may also implement isolation from another part of the processing module. Therefore, the first security unit is a TEE or a processor in the SOC, so that the peripheral system can implement a hardware security protection level, and information confidentiality and security are ensured. The second security unit is a secure element SE. Because the second security unit is external to the processing module, greater physical independence can be implemented. In addition, the sensitive information is stored by using a simple element, and therefore it is easier to establish physical protection and implement security assurance.

In a possible design, the processing module further includes a processing unit. The processing unit is integrated into a system on chip SOC, and is configured to process data of the plurality of peripheral modules. The hardware security unit includes a second security unit, the second security unit is disposed outside the SOC and is connected to the processing unit, and the second security unit is configured to output the control signal to the part or all of the peripheral modules. It may be understood that, because the external second security unit generates and outputs the control signal, security of the peripheral system in this application may be higher.

In a possible design, the input module includes a button module, a display, a keyboard, a mouse, and/or a microphone that are equipped with sensors. Therefore, the peripheral system in this application may flexibly design the input module based on an actual situation.

According to a second aspect, this application further provides a terminal. The terminal includes the peripheral system according to the first aspect or any one of the possible implementations of the first aspect.

In addition, for technical effects brought by any one of the possible implementations of the second aspect, refer to the technical effects brought by different implementations of the first aspect. Details are not described herein again.

### BRIEF DESCRIPTION OF DRAWINGS

To describe technical solutions in embodiments of this application more clearly, the following briefly describes accompanying drawings for describing embodiments.
FIG. 1 is a diagram of a terminal according to an embodiment of this application;
FIG. 2 is a diagram of a structure of a terminal according to an embodiment of this application;
FIG. 3 is a diagram of a peripheral system according to an embodiment of this application;
FIG. 4 is a diagram of a structure of a peripheral system according to Embodiment 1;
FIG. 5 is a diagram of a structure of a peripheral system according to Embodiment 2;
FIG. 6 is a diagram of a structure of a peripheral system according to Embodiment 3;
FIG. 7 is a diagram of a structure of a peripheral system according to Embodiment 4;
FIG. 8 is a diagram of a structure of a peripheral system according to Embodiment 5;
FIG. 9 is a diagram of a structure of a peripheral system according to Embodiment 6;
FIG. 10 is a diagram of a structure of a peripheral system according to Embodiment 7;
FIG. 11 is a diagram of a structure of a peripheral system according to Embodiment 8; and
FIG. 12 is a diagram of a structure of a peripheral system according to Embodiment 9.

**Description of reference numerals for main components**

| | |
|---|---|
| Terminal | 100 |
| Processing module | 1 and 22 |
| USB port | 2 |
| Mobile communication module | 3A |
| Antenna 1 | 3B |
| Wireless communication module | 4A |
| Antenna 2 | 4B |
| Display | 5 and 212 |
| Camera | 6 |
| Audio module | 7 |
| Speaker | 7A |
| Receiver | 7B |
| Microphone | 7C |
| Headset jack | 7D |
| Charging management module | 8 |
| Power management module | 9 |
| Battery | 10 |
| Interface for external memory | 11 |
| Internal memory | 12 |
| Sensor module | 13 |
| Button module | 14 and 211 |
| Switch | 15 |
| Secure element | 16 |
| Peripheral system | 20 |
| Input module | 21 |
| Protection module | 213 |
| Processing unit | 221 |
| Hardware security unit | 222 |
| First security unit | 222A |
| Second security unit | 222B |
| Enable interface | 223 |
| Reset Interface | 224 |
| Peripheral module | 23 |
| Peripheral hardware | 231 |
| Protection switch | 232 |
| Power supply | 24 |
| First power supply | 24A |
| Second power supply | 24B |
| Application server | 101 |

In the following specific implementations, this application is further described with reference to the accompanying drawings.

### DESCRIPTION OF EMBODIMENTS

The following clearly and completely describes the technical solutions in embodiments of this application with reference to the accompanying drawings in embodiments of this application.

It may be understood that a connection relationship described in this application is a direct or indirect connection. For example, that A is connected to B may be that A is directly connected to B, or that A is indirectly connected to B through one or more other electrical components, for example, A is directly connected to C, and C is directly connected to B, so that A is connected to B through C. It may be further understood that "A is connected to B" described in this application may be that A is directly connected to B, or may be that A is indirectly connected to B through one or more other electrical elements.

In descriptions of this application, unless otherwise specified, "/" means "or". For example, A/B may indicate A or B. The term "and/or" in this specification describes only an association relationship between associated objects and indicates that there may be three relationships. For example, A and/or B may represent the following three cases: Only A exists, both A and B exist, and only B exists.

In the descriptions of this application, words such as "first" and "second" are merely used to distinguish between different objects, and do not limit quantities and execution sequences. In addition, the words such as "first" and "second" do not indicate a definite difference. In addition, the terms "include" and "have" and any variations thereof are intended to cover non-exclusive inclusion.

With development of terminal devices such as mobile phones, applications (Applications, APPs) installed on the terminals become increasingly diverse. However, there is a security risk in a non-native system app on a terminal, namely, a third-party app provided by a manufacturer or an individual other than a system manufacturer. For example, a third-party app may invoke hardware devices such as a camera and a microphone in the terminal through a background, to steal personal privacy information.

Currently, a pure-software protection solution is used to protect the hardware devices. In the pure-software protection solution, peripherals that need protection are controlled by a processor core, and underlying security software of the processor core is used to authenticate a request of the third-party app, to defend against unauthorized access to the hardware devices by the third-party app. However, the security software is prone to security vulnerability. Therefore, the pure-software protection solution is susceptible to being deceived and bypassed by the third-party app, resulting in a low security level. In addition, frequent interaction required between the security software and a peripheral driver complicates an authentication manner. Therefore, it is difficult to implement the pure-software protection solution.

In view of this, embodiments of this application provide a terminal and a peripheral system thereof, effectively defending, by using hardware, against unauthorized access to or invocation of a peripheral by a third-party app, and avoiding leakage of personal privacy information. A security level is higher, and implementation is easier.

The technical solutions of this application are further described below in detail with reference to the accompanying drawings.

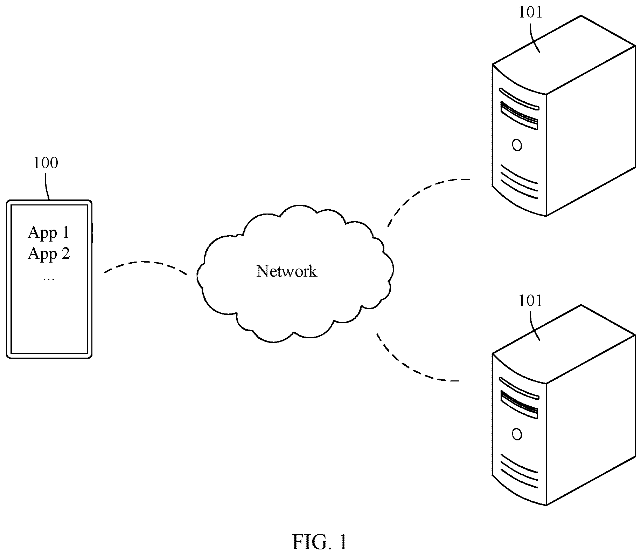

FIG. 1 is a terminal 100 according to an embodiment of this application.

As shown in FIG. 1, a plurality of applications (Applications, APPs) may be installed on the terminal 100, including a native system app on the terminal 100, and a third-party app. It may be understood that each app may correspond to an application server 101. A user may log in to the application server 101 of the app by using the terminal 100, and the application server 101 further provides a related service of the app for the user.

It may be understood that a specific type of the terminal 100 is not limited in embodiments of this application. For example, the terminal 100 may be a mobile phone, a tablet computer, a wearable device, a notebook computer, an ultra-mobile personal computer (ultra-mobile personal computer, UMPC), a netbook, a vehicle-mounted device, an augmented reality (augmented reality, AR) device/a virtual reality (virtual reality, VR) device, a personal digital assistant (personal digital assistant, PDA), or another electronic device that can run an app. For ease of description, an example in which the terminal 100 is a mobile phone is used for description in this embodiment of this application in FIG. 1.

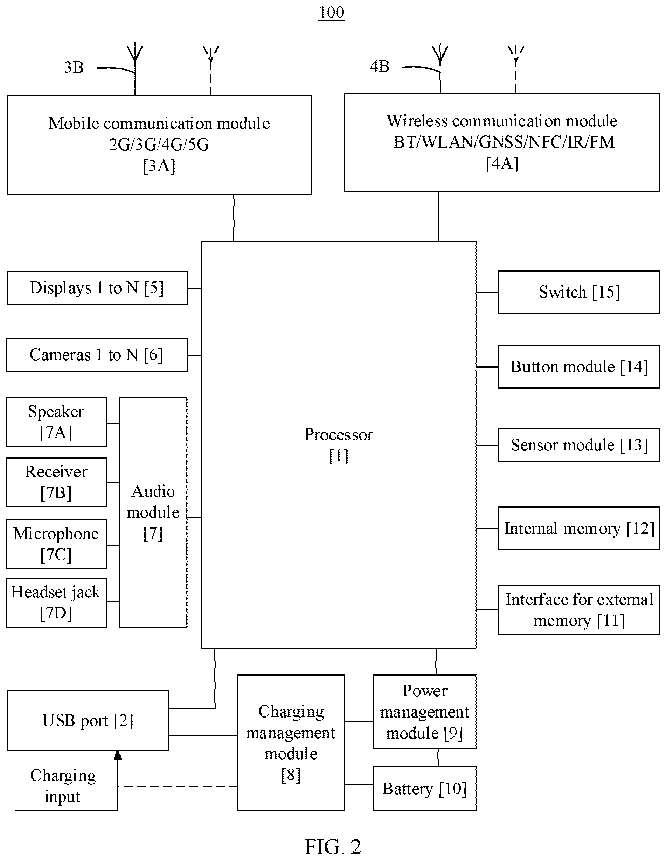

FIG. 2 is a diagram of a structure of a terminal 100.

As shown in FIG. 2, the terminal 100 may include a processing module 1, a universal serial bus (universal serial bus, USB) port 2, a mobile communication module 3A, an antenna 1 (corresponding to 3B in FIG. 2), a wireless communication module 4A, an antenna 2 (corresponding to 4B in FIG. 2), a display 5, a camera 6, an audio module 7, a speaker 7A, a receiver 7B, a microphone 7C, a headset jack 7D, a charging management module 8, a power management module 9, a battery 10, an interface 11 for external memory, an internal memory 12, a sensor module 13, a button module 14, a switch 15, and the like.

It may be understood that the mobile communication module 3A, the wireless communication module 4A, the display 5, the camera 6, the audio module 7, the speaker 7A, the receiver 7B, the microphone 7C, the power management module 9, the internal memory 12, and the sensor module 13 are all disposed on a periphery of the processing module 1, and therefore form peripheral devices of the processing module 1, namely, peripherals (the peripherals are referred to as peripheral hardware).

In embodiments of this application, the processing module 1 may include a plurality of processors. For example, the processing module 1 may include an application processor (application processor, AP), a controller, a modem processor, a graphics processing unit (graphics processing unit, GPU), an image signal processor (image signal processor, ISP), a video codec, a digital signal processor (digital signal processor, DSP), a baseband processor, a neural-network processing unit (neural-network processing unit, NPU), and/or the like. Different processors may be independent components, or may be integrated together. In addition, the AP and at least some other processors may jointly form a system on chip (namely, a system on chip, System on Chip, SOC).

The AP may execute an operating system (Operating System, OS), an app, and a user interface (User Interface, UI) of the terminal 100. The user interface may be displayed by the display 5. The user interface includes one or more visual controls for a user to input information, and the AP or another processor may perform a related operation based on the information input by the user. The controller may be a nerve center and a command center of a device 200 of the terminal 100. The controller may generate an operation control signal based on an instruction operation code and a time sequence signal, to complete control of instruction fetch and instruction execution.

In some embodiments, one of the enumerated processors (for example, the controller) may further include a trusted execution environment (Trusted Execution Environment, TEE). The TEE may be understood as an isolated area in the processing module 1. The TEE can securely store sensitive information (for example, a key, identity information, and permission) and perform a secure operation on the sensitive information (for example, verifying whether the user of the terminal 100 has permission to perform a specific operation, which may be referred to as authentication), to defend against unauthorized access, tampering, attacks, and the like, and can further send an operation result (for example, an authentication result, that is, whether authentication succeeds or fails) to the AP. Another part of the hardware and the app cannot actively access and obtain information in the TEE. Therefore, the TEE can ensure confidentiality and security of the information and implement a hardware security protection level.

In some other embodiments, a part of a kernel of one of the enumerated processors (for example, the controller) or another processor may be disposed to be dedicated to secure storage and secure operation of sensitive information, to defend against unauthorized access, tampering, attacks, and the like. For ease of description, the processor is referred to as a security processor in this application. The security processor may be electrically connected to the AP, to send an operation result to the AP. It may be understood that because the security processor is an independent processor, the security processor may be physically (that is, hardware) independent, and is isolated from another part of the processing module 1, to implement a hardware security protection level.

In some other embodiments, the processing module 1 may further include a secure element 16 (Secure Element, SE), and the SE is externally connected to the SOC. The SE is an anti-tampering storage element, and may be configured to securely store sensitive information such as a key, an identity, and permission. The SE may be connected to the TEE or the security processor in the processing module 1 through an authorized interface. In this way, the TEE or the security processor may receive the sensitive information sent by the SE to perform an operation. Certainly, the SE may be further configured to perform a secure operation on the sensitive information. The SE may be connected to the AP in the processing module 1 through an authorized interface. In this way, the AP may receive an operation result of the SE. It may be understood that, because the SE is an external independent component, the SE has higher physical (that is, hardware) independence, resulting in stronger hardware security protection.

A memory can be further disposed in the processing module 1, and is configured to store instructions and data. In some embodiments, the memory in the processing module 1 is a cache. The memory may store instructions or data that has been recently used or cyclically used by the processing module 1. If the processing module 1 needs to reuse the instructions or data, the processing module 1 may directly call the instructions or data from the memory. This avoids repeated access, reduces wait time of the processing module 1, and improves efficiency.

In embodiments of this application, the processing module 1 has a plurality of interfaces. For example, the interfaces may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor 1 interface (mobile industry processor interface, MIPI), a general-purpose input/output (general-purpose input/output, GPIO) interface, a subscriber identity module (subscriber identity module, SIM) card interface, and/or a universal serial bus (universal serial bus, USB) port (FIG. 2 shows only some interfaces).

Specifically, the I2C interface is a two-way synchronization serial bus. The processing module 1 may be separately coupled to the touch sensor, a charger, the camera 6, and the like through different I2C bus interfaces. For example, the processing module 1 may be coupled to the touch sensor through the I2C interface, so that the processing module 1 communicates with the touch sensor through the I2C bus interface, to implement a touch function of the terminal 100.

The I2S interface may be configured to perform audio communication. The processing module 1 may be coupled to the audio module 7 through the I2S bus, to implement communication between the processing module 1 and the audio module 7.

The PCM interface may also be configured to perform audio communication, and sample, quantize, and code an analog signal. In some embodiments, the audio module 7 may be coupled to the wireless communication module 4A through a PCM bus interface. The audio module 7 may alternatively transmit an audio signal to the wireless communication module 4A through the PCM interface.

The UART interface is a universal serial data bus, and is configured to perform asynchronous communication. The bus may be a two-way communication bus. The bus converts to-be-transmitted data between serial communication and parallel communication. In some embodiments, the UART interface is usually configured to connect the processing module 1 to the wireless communication module 4A.

The MIPI interface may be configured to connect the processing module 1 to the peripheral hardware, for example, the display 5 and the camera 6. In some embodiments, the processing module 1 communicates with the camera 6 through the MIPI interface, to implement a photographing function of the terminal 100. The processing module 1 communicates with the display 5 by using a MIPI interface, to implement a display function of the terminal 100.

The GPIO interface may be configured to connect the processing module 1 to the peripheral hardware, for example, the button module 14, the switch 15, and the camera 6. The GPIO interface may be configured as a control interface, a data interface, an enable (enable, EN) interface, or a reset (reset, RST) interface as required. For example, the GPIO is a data interface, and the processing module 1 may be connected to the button module 14 through the GPIO interface. Once an action is performed on a button in the button module 14 (that is, the button is pressed), the button module 14 may receive button information, and transmit the button information to the processing module 1 through the connected GPIO interface. The processing module 1 may trigger corresponding processing based on the button information. Alternatively, the GPIO is a control interface, the processing module 1 may be connected to the switch 15 through the GPIO interface, and the processing module 1 may output a control signal through the GPIO interface to control the switch 15 to be turned on or off.

The USB port 2 is an interface that conforms to a USB standard specification, and may be specifically a mini USB port, a micro USB port, a USB type-C port, or the like. The USB port 2 may be configured to connect to a charger to charge the terminal 100, or may be configured to transmit data between the terminal 100 and an external device (for example, an external keyboard, an external mouse, or an external card reader).

The SIM card interface is configured to connect to a SIM card. The terminal 100 interacts with a network by using the SIM card, to implement functions such as calling and data communication.

It may be understood that an interface connection relationship between the units/modules/peripheral hardware/components is merely an example for description, and does not constitute a limitation on the structure of the terminal 100. In some other embodiments, the terminal 100 may alternatively use an interface connection manner different from that in the foregoing embodiment, or a combination of a plurality of interface connection manners.

In embodiments of this application, the terminal 100 may implement a wireless communication function by using the mobile communication module 3A, the wireless communication module 4A, the antenna 1, the antenna 2, the modem processor, the baseband processor, and the like.

The mobile communication module 3A can provide a wireless communication solution that is applied to the terminal 100 and that includes 2G/3G/4G/5G, or the like. The mobile communication module 3A may include at least one filter, the switch 15, a power amplifier, a low noise amplifier (low noise amplifier, LNA), and the like. The mobile communication module 3A may receive an electromagnetic wave by using the antenna 1, perform processing such as filtering or amplification on the received electromagnetic wave, and transmit a processed electromagnetic wave to the modem processor for demodulation. The mobile communication module 3A may further amplify a signal modulated by the modem processor, and convert the signal into an electromagnetic wave for radiation by using the antenna 1. In some embodiments, at least some functional modules of the mobile communication module 3A may be disposed in the processing module 1. In some embodiments, at least some of the functional modules of the mobile communication module 3A may be disposed in a same component as at least some of modules of the processing module 1.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal through an audio device (not limited to the speaker 7A, the receiver 7B, and the like), and displays an image or a video through the display 5. In some embodiments, the modem processor may be an independent component. In some other embodiments, the modem processor may be independent of the processing module 1, and disposed in a same component as the mobile communication module 3A or another functional module.

The wireless communication module 4A may provide a wireless communication solution that is applied to the terminal 100, and that includes a wireless local area network (wireless local area networks, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 4A may be one or more components that integrate at least one communication processing module 1. The wireless communication module 4A receives an electromagnetic wave by using the antenna 2, performs frequency modulation on the electromagnetic wave signal, filters the electromagnetic wave signal, and sends a processed signal to the processing module 1. The wireless communication module 4A may also receive a to-be-sent signal from the processing module 1, perform frequency modulation on and amplify the to-be-sent signal, and convert the to-be-sent signal into an electromagnetic wave by using the antenna 2 for radiation.

In some embodiments, the antenna 1 of the terminal 100 is coupled to the mobile communication module 3A, and the antenna 2 is coupled to the wireless communication module 4A, so that the processing module 1 of the terminal 100 can communicate with a network and another device (for example, a keyboard, a mouse, a wireless headset, or a surveillance camera 6) by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, IR technologies, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation systems, SBAS).

In embodiments of this application, the terminal 100 may implement a display function by using the GPU, the display 5, the application processor, and the like. The GPU is a microprocessor for image processing, and is connected to the display 5 and the application processor. The GPU is configured to: perform mathematical and geometric computation, and render an image. The processing module 1 may include one or more GPUs, and the GPU executes program instructions to generate or change displayed information.

The display 5 is configured to display an image, a video, and the like. The display 5 includes a display panel. The display panel may be a liquid crystal display 5 (liquid crystal display, LCD), an organic light-emitting diode (organic light-emitting diode, OLED), an active-matrix organic light-emitting diode (active-matrix organic light-emitting diode, AMOLED), a flexible light-emitting diode (flex light-emitting diode, FLED), a mini-LED, a micro-LED, a micro-OLED, a quantum dot light-emitting diode (quantum dot light-emitting diode, QLED), or the like. In some embodiments, the terminal 100 may include one or N displays 5, where N is a positive integer greater than 1. The N displays 5 may be further folded or unfolded, and the unfolded N displays 5 may be combined into a display 5 with a large size.

In embodiments of this application, the terminal 100 may implement a photographing function by using the ISP, the camera 6, the video codec, the GPU, the display 5, the application processor, and the like.

The ISP is configured to process data fed back by the camera 6, and convert the data into a visible image. The ISP may further perform algorithm optimization on noise, luminance, and a skin color of the image. The ISP may further optimize parameters such as exposure and a color temperature of a photographed scene. In some embodiments, the ISP may be disposed in the camera 6.

The camera 6 is configured to capture a still image or a video. In some embodiments, the terminal 100 may include one or N cameras 6, where N is a positive integer greater than 1.

The digital signal processor is configured to process a digital signal, and may process another digital signal in addition to the digital image signal. For example, when the terminal 100 selects a frequency, the digital signal processor is configured to perform Fourier transformation on frequency energy.

The video codec is configured to compress or decompress a digital video. The terminal 100 may support one or more types of video codecs. In this way, the terminal 100 can play or record videos in a plurality of coding formats, for example, moving picture experts group (moving picture experts group, MPEG), MPEG-2, MPEG-3, and MPEG-4.

The NPU is a neural-network (neural-network, NN) computing processor. The NPU quickly processes input information by referring to a structure of a biological neural network, for example, a transfer mode between human brain neurons, and may further continuously perform self-learning. Applications such as intelligent cognition of the terminal 100, for example, image recognition, facial recognition, speech recognition, and text understanding, may be implemented through the NPU.

In embodiments of this application, the terminal 100 may implement an audio function such as music playing or recording by using the audio module 7, the speaker 7A, the receiver 7B, the microphone 7C, the headset jack 7D, the application processor, and the like.

The audio module 7 is configured to convert digital audio information into an analog audio signal for output, and is also configured to convert analog audio input into a digital audio signal. The audio module 7 can be further configured to encode and decode an audio signal. In some embodiments, the audio module 7 may be disposed in the processing module 1, or some functional modules of the audio module 7 are disposed in the processing module 1.

The speaker 7A, also referred to as a loudspeaker, is configured to convert an electrical audio signal into a sound signal. Music can be listened to or a hands-free call can be answered by using the speaker 7A in the terminal 100.

The receiver 7B, also referred to as an earpiece, is configured to convert an electrical audio signal into a sound signal. When the terminal 100 receives a call or speech information, the terminal 100 may listen to a speech by placing the receiver 7B near an ear.

The microphone 7C, also referred to as a mike or a mic, is configured to convert a sound signal into an electrical signal. When making a call or sending voice information, a user may place the mouth of the user near the microphone 7C to make a sound, to input a sound signal to the microphone 7C.

The headset jack 7D is configured to connect to a wired headset. The headset jack 7D may be a USB port 2, or may be a 3.5 mm open mobile terminal platform (open mobile terminal platform, OMTP) standard interface or cellular telecommunications industry association of the USA (cellular telecommunications industry association of the USA, CTIA) standard interface.

In embodiments of this application, the charging management module 8, the battery 10, and the power management module 9 may supply power to other parts of the terminal 100.

The charging management module 8 is configured to receive a charging input from a charger. The charger may be a wireless charger or a wired charger. In some embodiments of wired charging, the charging management module 8 may receive a charging input of a wired charger through the USB port 2. In some embodiments of wireless charging, the charging management module 8 may receive a wireless charging input by using a wireless charging coil of the terminal 100. The charging management module 8 may further supply power to the other parts of the terminal 100 by using the power management module 9 while charging the battery 10.

The power management module 9 is configured to connect to the battery 10, the charging management module 8, and the processing module 1. The power management module 9 receives an input from the battery 10 and/or the charging management module 8, and supplies power to the peripheral hardware such as the processing module 1 and the display 5. It may be understood that the power management module 9 may include a plurality of power supply circuits to meet power supply requirements of different processors and/or different peripheral hardware in the processing module 1. Any power supply circuit that supplies power to a specific processor or peripheral hardware may form a power supply 24 of the processor or the peripheral hardware. The power management module 9 may be further configured to monitor parameters such as a capacity of the battery 10, a cycle count of the battery 10, and a health status (electric leakage and impedance) of the battery 10.

The interface 11 for external memory may be configured to connect to an external memory card, for example, a micro SD card, to extend a storage capability of the terminal 100. The external memory card communicates with the processing module 1 through the interface 11 for external memory, to implement a data storage function. For example, user data (such as a picture, music, a video, and a document) generated by an app and peripheral hardware is stored in the external memory card.

The internal memory 12 may be configured to store computer-executable program code. The executable program code includes instructions. The processing module 1 runs the instruction stored in the internal memory 12, to execute various function applications and data processing of the terminal 100. The internal memory 12 may include a program storage area and a data storage area. The program storage area may store an operating system, an application required by at least one function (for example, a sound playing function or an image playing function), and the like. The data storage area may store data (for example, audio data and an address book) and the like created when the terminal 100 is used. In addition, the internal memory 12 may include a highspeed random access memory, or may include a non-volatile memory, for example, at least one magnetic disk storage device, a flash memory, or a universal flash storage (universal flash storage, UFS).

The sensor module 13 may include a touch sensor, a pressure sensor, a gyro sensor, a barometric pressure sensor, a magnetic sensor, an acceleration sensor, a distance sensor, a proximity sensor, a fingerprint sensor, a temperature sensor, an ambient light sensor, a bone conduction sensor, and the like. It may be understood that at least some sensors in the sensor module 13 may be disposed on the display 5.

For example, the touch sensor may be disposed on the display 5, and the touch sensor and the display 5 form a touchscreen, which is also referred to as a touch screen. The touch sensor may detect a touch operation acting on or near the touch sensor. Therefore, when the user touches the visual control on the user interface displayed on the display 5, a touch sensor located in or near an area in which the visual control is located may transfer a detected touch operation (which may be referred to as touch information) to the AP, to identify an event type indicated by the visual control touched by the user. A visual output related to the touch operation may be provided by the AP through the display 5.

The button module 14 includes a button and a button circuit. The button may include a power button, a volume button, and the like. The button may be a mechanical button, or a touch key. The button may be used by the user of the terminal 100 to input user setting or function control. The button circuit may receive information input by the user by pressing the button, namely, button information, and transmit the information to the processing module 1. The processing module 1 may complete corresponding configuration or function control based on the button information.

The switch 15 may include a mechanical switch 15 and/or a semiconductor switch 15. This is not specifically limited herein. The mechanical switch 15 includes but is not limited to a relay or a contactor. The semiconductor switch 15 includes but is not limited to a silicon controlled rectifier (Silicon Controlled Rectifier, SCR), a metal-oxide-semiconductor field-effect transistor (metal-oxide-semiconductor field-effect transistor, MOSFET), or an insulated gate bipolar transistor (insulated gate bipolar transistor, IGBT). The terminal 100 may include one or N switches 15, where N is a positive integer greater than 1. In addition, the switch 15 may be connected between the processing module 1 and various peripheral hardware, or may be connected between the power supply 24 and the various peripheral hardware.

In embodiments of this application, the terminal 100 may further include a protective housing (not numbered in FIG. 1). The display 5 is disposed on a side of the protective housing and is connected to the protective housing. Space is formed between the display 5 and the protective housing. The processing module 1, the various peripheral hardware, the switch 15, and the like may be disposed in the space. Interfaces such as the USB port 2, the headset jack 7D, and the camera 6 may be exposed from the protective housing. The button may be disposed on a surface of the protective housing (not numbered in FIG. 1), to facilitate a user operation.

It may be understood that the structure illustrated does not constitute a specific limitation on the terminal 100 in embodiments of this application. In some other embodiments, the terminal 100 may include more or fewer components than those shown in the figure, or some components may be combined, or some components may be split, or there may be a different component layout.

For example, in some embodiments, the processing module 1 may be connected to external hardware devices (not shown in FIG. 2), such as a wired keyboard, a wired mouse, or a card reader through an interface, or may be communicatively connected to external hardware devices (not shown in FIG. 2), such as a wireless keyboard, a wireless mouse, or a surveillance camera by using a wireless communication technology and a network. It may be understood that these external hardware devices such as a keyboard, a mouse, a card reader, and a surveillance camera may also form a part of the terminal 100, or may be used as the peripheral hardware of the processing module 1.

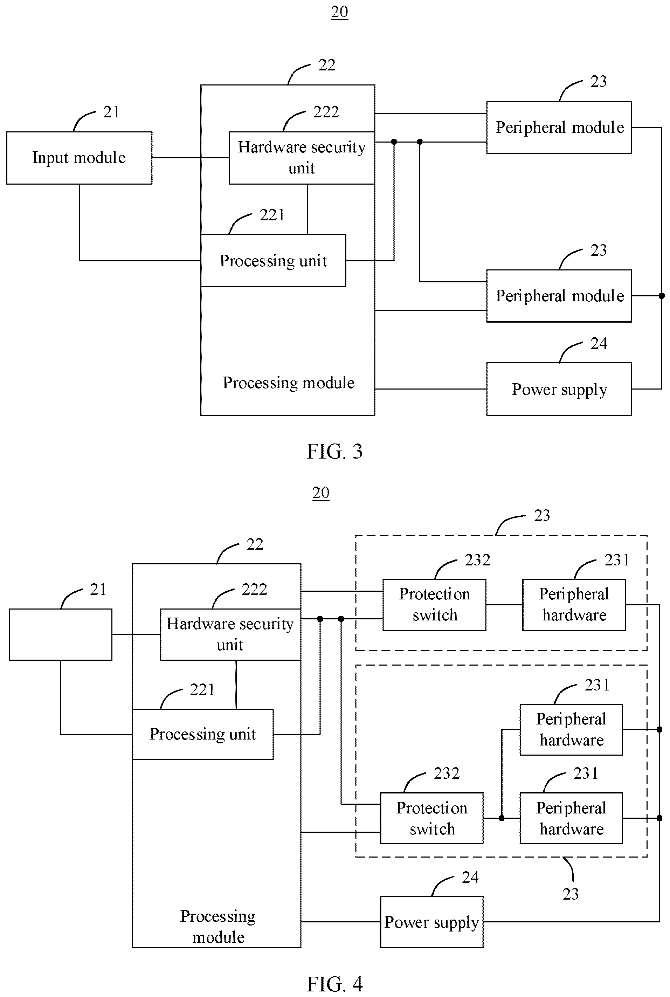

Refer to FIG. 3. An embodiment of this application further provides a peripheral system 20 of a terminal.

As shown in FIG. 3, the peripheral system 20 includes an input module 21, a processing module 22, a plurality of peripheral modules 23, and a power supply 24. The input module 21 is connected to the processing module 22, the processing module 22 is connected to the plurality of peripheral modules 23, and the power supply 24 is connected to the processing module 22 and the plurality of peripheral modules 23. The processing module 22 includes a processing unit 221 and a hardware security unit 222. Each peripheral module 23 includes peripheral hardware 231. For ease of description, an example in which the peripheral system 20 has two peripheral modules 23 is used for description in this embodiment of this application.

It may be understood that the terminal may be the terminal 100 in the foregoing embodiment. For details, refer to the descriptions in FIG. 1 and FIG. 2.

Therefore, in the peripheral system 20 in this embodiment of this application, the processing module 22 may be a processing module 22 in the terminal 100. The processing unit 221 may be an AP in the processing module 22, or a combination of the AP and another processor. The hardware security unit 222 may be a TEE, a security processor, or an SE in the processing module 22, or a combination of the TEE/security processor and the SE.

The power supply 24 may be a power supply 24 in the terminal 100. The power supply 24 may supply power to the processing module 22 and the peripheral module 23. The input module 21 may be powered by the processing module 22 (as shown in FIG. 3). Certainly, the input module 21 may also be powered by the power supply 24. This is not limited herein.

The peripheral hardware 231 in the peripheral module 23 may be peripheral hardware 231 in the terminal 100, for example, a camera, a microphone, or a wireless communication module (for example, a GPS module), or may be an external hardware device, for example, a surveillance camera externally connected to the terminal 100, or a card reader externally connected to the terminal 100. This is not limited herein.

The input module 21 may be a module/hardware/device/component that is in the terminal 100 and that may be configured to be operated by a user to input information. For example, the input module 21 may be a button module, a display, a microphone, or a keyboard and/or a mouse that are equipped with sensors, where the keyboard and/or the mouse are/is externally connected to the terminal 100. This is not limited in embodiments of this application.

In embodiments of this application, the processing unit 221 may be configured to: perform data transmission (that is, communicate) with the plurality of peripheral modules 23, and process data of the plurality of peripheral modules 23, so that the peripheral modules 23 can implement a corresponding function.

The input module 21 may be configured to: receive input information, and transmit the input information to the processing module 22.

The hardware security unit 222 may be configured to: receive the input information, generate a corresponding control signal based on an input signal, and output the control signal to a part or all of the peripheral modules 23, to control communication statuses (for example, whether the peripheral modules 23 communicate with the processing module 22), power supply statuses (for example, the peripheral modules 23 are normally powered by the power supply 24 or are powered off), and/or startup statuses (for example, the peripheral modules 23 normally start running, stop running, or wait to start running) of the part or all of the peripheral modules 23.

Based on this design, when the user does not need to use a part or all of the peripheral hardware 231 in the terminal 100, the user may operate the input module 21, so that the input module 21 can receive input information input by the operation. Further, the hardware security unit 222 may generate a control signal based on the input information to control the peripheral modules 23 that do not need to be used to be disconnected from communication with the processing module 22, and/or control the peripheral modules 23 that do not need to be used to be powered off, and/or control the peripheral modules 23 that do not need to be used to stop running or wait to start running (that is, the peripheral modules 23 are in a reset wait state).

It may be understood that, after communication between the peripheral modules 23 and the processing modules 22 is disconnected, a third-party app has no communication channel to access or invoke the peripheral modules 23. Therefore, even if the third-party app deceives and bypasses software protection, the third-party app cannot obtain the user data generated by the peripheral modules 23.

After the peripheral modules 23 are powered off, the peripheral modules 23 stop running due to power-off. Therefore, when the peripheral modules 23 are controlled to be powered off and the peripheral modules 23 are controlled to stop running, the third-party app cannot access or invoke the peripheral modules 23. Therefore, even if the third-party app deceives and bypasses software protection, the third-party app cannot obtain the user data generated by the peripheral modules 23.

It can be learned that, when communication between the peripheral modules 23 and the processing module 22 is disconnected, the peripheral modules 23 are powered off, and the peripheral modules 23 stop running or wait to start running, the peripheral modules 23 cannot operate normally, and consequently cannot provide the user data for the processing module 22. Therefore, a path for stealing the user data by the third-party app is cut off, effectively protecting the user data. Therefore, when communication between the peripheral modules 23 and the processing module 22 is disconnected, the peripheral modules 23 are powered off, and the peripheral modules 23 stop running or wait to start running, it may be understood that the peripheral system 20 is in security mode.

Correspondingly, when the peripheral modules 23 normally communicate with the processing module 22, the peripheral modules 23 normally supply power, and the peripheral modules 23 normally start running, it may be understood that the peripheral systems 20 are in normal mode.

In addition, in embodiments of this application, the hardware security unit 222 processes the input information and generates the control signal. The hardware security unit 222 may implement hardware-level security protection. Another part of the processing module 22 and the app cannot actively access and obtain the information in the hardware security unit 222, that is, the information in the hardware security unit 222 cannot be obtained at software and hardware layers. Therefore, the hardware security unit 222 can prevent the third-party app from accessing and obtaining the information in the hardware security unit 222.

For better understanding, the following further describes peripheral systems 20 of the terminal in embodiments of this application by using Embodiment 1 to Embodiment 9. Embodiment 1 to Embodiment 6 mainly describe a peripheral module 23, and Embodiment 7 to Embodiment 9 mainly describe an input module 21 and a processing module 22. It may be understood that, when no conflict occurs, the following embodiments and the features in embodiments may be mutually combined.

### Embodiment 1

FIG. 4 is a diagram of a peripheral system 20 of a terminal according to Embodiment 1.

As shown in FIG. 4, the peripheral system 20 of the terminal includes an input module 21, a processing module 22, a plurality of peripheral modules 23, and a power supply 24. For descriptions of the input module 21, the processing module 22, and the power supply 24, refer to the foregoing content. Details are not described herein again.

In Embodiment 1, each peripheral module 23 includes peripheral hardware 231 and a protection switch 232, and the protection switch 232 is connected between the peripheral hardware 231 and the processing module 22. The protection switch 232 may be a switch in the terminal 100.

It may be understood that the protection switch 232 in each peripheral module 23 may be connected to one piece of peripheral hardware 231, or may be connected to at least two pieces of peripheral hardware 231. When the protection switch 232 is connected to the at least two pieces of peripheral hardware 231, types of the peripheral hardware 231 are the same. For example, one protection switch 232 is connected to two cameras. This can reduce a quantity of protection switches 232, costs, and control complexity.

A hardware security unit 222 is connected to the protection switch 232. Therefore, the hardware security unit 222 may output a control signal to the protection switch 232, to control an on/off state of the protection switch 232.

When the protection switch 232 is turned on, the processing module 22 and the peripheral hardware 231 can normally communicate with each other. When the protection switch 232 is turned off, communication between the processing module 22 and the peripheral hardware 231 is disconnected. Therefore, the hardware security unit 222 may control a communication status of the peripheral hardware 231 by controlling the on/off state of the protection switch 232.

### Embodiment 2

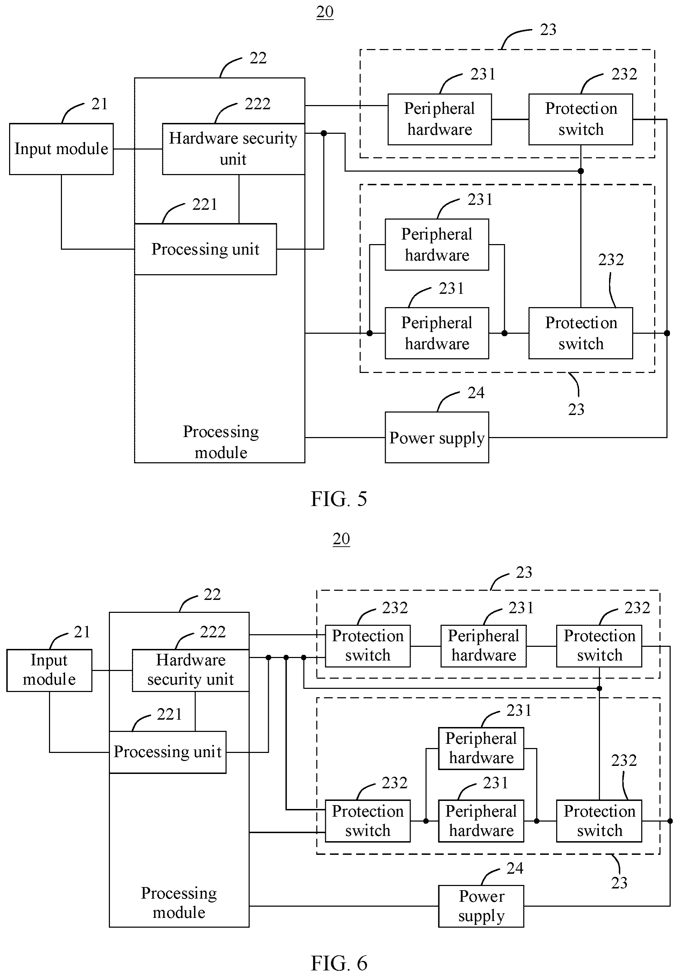

FIG. 5 is a diagram of a peripheral system 20 of a terminal according to Embodiment 2.

A difference of Embodiment 2 from Embodiment 1 mainly lies in that, in each peripheral module 23 in Embodiment 2, a protection switch 232 is connected between peripheral hardware 231 and a power supply 24.

A hardware security unit 222 is connected to the protection switch 232. Therefore, the hardware security unit 222 may output a control signal to the protection switch 232, to control an on/off state of the protection switch 232.

When the protection switch 232 is turned on, the power supply 24 may supply power to the peripheral hardware 231. When the protection switch 232 is turned off, the power supply 24 cannot supply power to the peripheral hardware 231, and the peripheral hardware 231 is powered off and cannot run. Therefore, the hardware security unit 222 may control a power supply status of the peripheral hardware 231 by controlling the on/off state of the protection switch 232.

### Embodiment 3

FIG. 6 is a diagram of a peripheral system 20 of a terminal according to Embodiment 3.

A difference of Embodiment 3 from Embodiment 1 and Embodiment 2 mainly lies in that, in each peripheral module 23 in Embodiment 3, one protection switch 232 is connected between peripheral hardware 231 and a processing module 22, and the other protection switch 232 is connected between the peripheral hardware 231 and a power supply 24. Therefore, Embodiment 3 may be understood as a combination of Embodiment 1 and Embodiment 2. For specific descriptions, refer to Embodiment 1 and Embodiment 2. Details are not described herein again.

### Embodiment 4

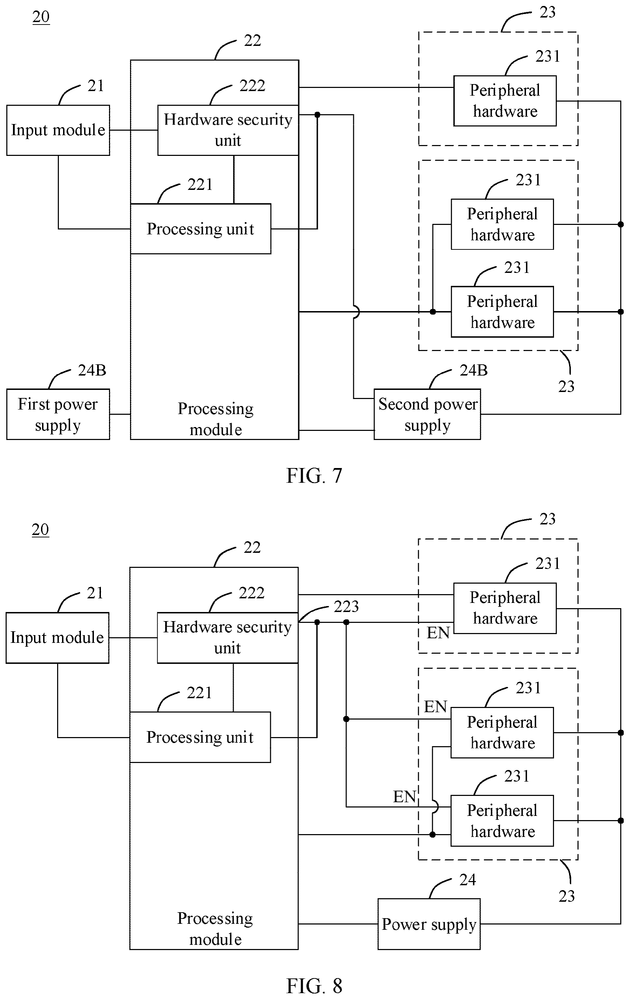

FIG. 7 is a diagram of a peripheral system 20 of a terminal according to Embodiment 4.

A difference of Embodiment 4 from Embodiment 1 mainly lies in that, the peripheral system 20 in Embodiment 4 includes two power supplies: a first power supply 24A and a second power supply 24B.

The first power supply 24A is connected to a processing module 22 to supply power to the processing module 22. The second power supply 24B is connected to a plurality of peripheral modules 23 to supply power to the plurality of peripheral modules 23. The second power supply 24B is connected to the processing module 22. Each peripheral module 23 includes at least peripheral hardware 231.

Therefore, a hardware security unit 222 may output a control signal to the second power supply 24B, to control the second power supply 24B to operate or not operate.

When the second power supply 24B operates, the second power supply 24B may supply power to the peripheral hardware 231. When the second power supply 24B does not operate, the second power supply 24B cannot supply power to the peripheral hardware 231, and the peripheral hardware 231 is powered off and cannot run. Therefore, the hardware security unit 222 may control a power supply status of the peripheral hardware 231 by controlling operation of the second power supply 24B (that is, controlling whether the second power supply 24B supplies power to the connected peripheral hardware 231).

### Embodiment 5

FIG. 8 is a diagram of a peripheral system 20 of a terminal according to Embodiment 5.

A main difference of Embodiment 5 from Embodiment 1 lies in that, a processing module 22 in Embodiment 5 has an enable interface 223, and each peripheral module 23 includes at least peripheral hardware 231.

Each peripheral module 23 is connected to the enable interface 223. Therefore, a hardware security unit 222 may output a control signal to the peripheral module 23 through the enable interface 223.

It may be understood that the control signal output through the enable interface 223 is equivalent to an enable signal (EN as shown in FIG. 7) or a disable signal, which may enable the peripheral module 23 (that is, the control signal is equivalent to the enable signal, which may enable the peripheral module 23 to normally start running), or disable the peripheral module 23 (that is, the control signal is equivalent to the disable signal, which may prevent the peripheral module 23 from starting running, that is, enable the peripheral module 23 to stop running). Therefore, the hardware security unit 222 outputs the control signal through the enable interface 223, to control a startup status of the peripheral module 23.

### Embodiment 6

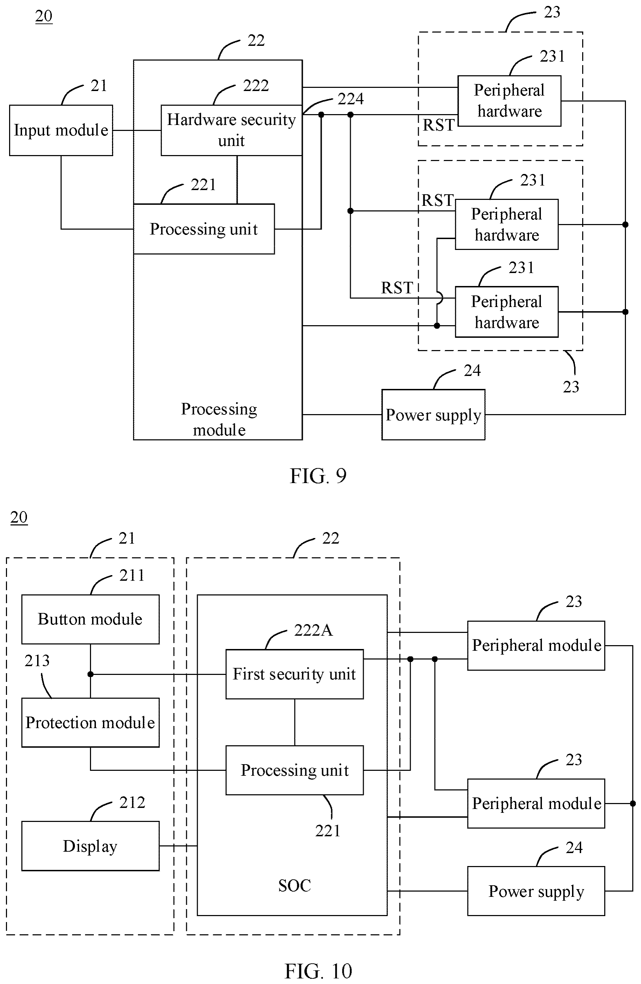

FIG. 9 is a diagram of a peripheral system 20 of a terminal according to Embodiment 6.

A main difference of Embodiment 6 from Embodiment 1 lies in that, a processing module 22 in Embodiment 6 has a reset interface 224, and each peripheral module 23 includes at least peripheral hardware 231.

Each peripheral module 23 is connected to the reset interface 224. Therefore, a hardware security unit 222 may output a control signal to the peripheral module 23 through the reset interface 224.

It may be understood that the control signal output through the reset interface 224 is equivalent to a reset signal (RST as shown in FIG. 7) or a set signal, which may reset the peripheral module 23 (that is, the control signal is equivalent to the reset signal, which may enable the peripheral module 23 to end a current state and enter a reset wait state, for example, change the peripheral module 23 from an operating state to a reset wait state, that is, enable the peripheral module 23 to wait to start operating), or not reset the peripheral module 23 (that is, the control signal is equivalent to the set signal, which may enable the peripheral module 23 to maintain a current state, for example, enable the peripheral module 23 to continue to operate), thereby controlling a startup status of the peripheral module 23. Therefore, the hardware security unit 222 outputs the control signal through the reset interface 224, to control a startup status of the peripheral module 23.

### Embodiment 7

FIG. 10 is a diagram of a peripheral system 20 of a terminal according to Embodiment 7.

As shown in FIG. 10, the peripheral system 20 of the terminal includes an input module 21, a processing module 22, a plurality of peripheral modules 23, and a power supply 24. The processing module 22 is integrated into a SOC. The processing module 22 includes a processing unit 221 and a hardware security unit 222, that is, the processing unit 221 and the hardware security unit 222 are integrated into the SOC.

In Embodiment 7, the hardware security unit 222 includes a first security unit 222A. The first security unit 222A may be a trusted execution environment TEE in the SOC, or may be a security processor. This is not limited herein. The first security unit 222A is connected to the processing unit 221.

For ease of description, the processing unit 221 is described by using an AP as an example. For descriptions of the TEE, the security processor, the AP, the peripheral module 23, the power supply 24, and the processing unit 221, refer to the content in the foregoing embodiments. Details are not described herein again.

In Embodiment 7, for ease of description, an example in which the input module 21 includes a button module 211 and a display 212 equipped with a sensor is used for description. The button module 211 may be the button module 14 in the terminal 100, and the display 212 may be the display 5 in the terminal 100. As shown in FIG. 10, both the button module 211 and the display 212 equipped with the sensor are connected to the processing module 22.

It may be understood that, when the button module 211 is used as the input module 21, once a button in the button module 211 is pressed, the button module 211 may receive button information, where the button information is input information, and the button module 211 transmits the input information to the first security unit 222A. After receiving the input information, the first security unit 222A may generate a corresponding control signal based on the input information.

For example, when the button is pressed, it may indicate that a user needs to disable the peripheral module 23. Therefore, the control signal generated by the first security unit 222A is used to control the peripheral module 23 to stop running or wait to start running. When the button is pressed again or another different button is pressed, it may indicate that the user needs to enable the peripheral module 23. Therefore, the control signal generated by the first security unit 222A is used to control the peripheral module 23 to start running. It can be learned that, using the button module 211 as the input module 21 enables one-tap control of the peripheral module 23, improving control efficiency.

It may be understood that when the display 212 equipped with the sensor is used as the input module 21, once a visual control on a user interface displayed by the display 212 is touched, the display 212 may receive touch information, where the touch information is input information. Considering interface compatibility, the display 212 first transmits, through an interface, the input information to the AP for processing, and then the AP transmits the processed input information to the first security unit 222A. This avoids a problem that the first security unit 222A cannot receive or process the touch information.

It is considered that the input information is first processed by the AP, a third-party app running on the AP may tamper with the input information, causing abnormal control of the peripheral module 23. As a result, the third-party app steals user data generated by the peripheral module 23, leading to leakage of personal privacy information. Therefore, in Embodiment 7, when the display 212 receives the input information, the first security unit 222A is further configured to perform authentication on the input information.

Specifically, the input module 21 may further receive personal information input by the user. For example, a touch sensor disposed on the display 212 may collect personal information input by the user through a touch on a virtual keyboard or a handwritten signature, or the sensor disposed on the display 212 collects a biometric feature of the user to obtain the personal information, for example, facial information, a palmprint, or an iris collected by a camera, or fingerprint information collected by the camera or a fingerprint sensor. This is not limited in Embodiment 7.

The first security unit 222A stores sensitive information such as identity information and permission. Therefore, the identity information and permission may be compared with the personal information, to identify a user identity, and further determine whether the user has permission to control the peripheral hardware 231. When authentication succeeds (that is, the user has the permission), the first security unit 222A may generate the control signal based on the input information. When authentication fails (that is, the user has no permission), the first security unit 222A does not generate the control signal based on the input information.

It may be understood that, because the first security unit 222A performs authentication processing, the first security unit 222A may implement hardware security protection, and other hardware or apps cannot actively access and obtain information in the first security unit 222A. Therefore, privacy and security may be high.

In Embodiment 7, the button module 211 and the display 212 may be further used in combination. Specifically, the AP may further control the display 212 to display a corresponding user interface, so that the user touches and sets a peripheral module 23 associated with a power button, a volume button, or another button, and the user may further touch and set various statuses (such as a communication status, a power supply status, and a startup status) and a type of the associated peripheral module 23, and a quantity (for example, one, at least two, or all) of associated peripheral modules 23. After receiving touch information, the AP may process the touch information to identify a touch operation of the user indicated by the touch information, and transmit the processed touch information to the first security unit 222A, so that the first security unit 222A may perform corresponding configuration based on the processed touch information.

For example, when the power button is pressed, the button module 211 may receive input information indicating that the power button is pressed, and then the first security unit 222A may generate a control signal based on the input information to control the peripheral module 23 associated with the power button to stop running or wait to start running. When the power button is pressed again, the button module 211 may receive input information indicating that the power button is pressed again, and then the first security unit 222A generates a control signal to control the peripheral module 23 associated with the power button to start running.

It may be understood that, considering that, the same as the foregoing case in which the display 212 receives the input information, the third-party app running on the AP may unauthorizedly tamper with the touch information, the first security unit 222A may further perform authentication on the touch information, to determine whether the user has permission to set the peripheral module 23. For authentication herein, refer to the foregoing content. Details are not described herein again.

Certainly, in Embodiment 7, the input module 21 does not limit a manner of receiving the input information. For example, the input module 21 may alternatively receive the input information in another manner.

For example, it is considered that when the display 212 of the terminal is turned off for a long time, it may indicate that the user does not need to use the peripheral hardware 231 of the terminal. Therefore, an ambient light sensor disposed on the display 212 may collect luminance of the display 212 within specific duration, and use the luminance of the display 212 as input information, so that the first security unit 222A controls the peripheral hardware 231 to stop starting or wait to start.

For another example, it is considered that when the display 212 of the terminal is folded, it may indicate that the user does not need to use the peripheral hardware 231 of the terminal. Therefore, a magnetic sensor disposed on the display 212 may collect a folding status of the display 212, and use the folding status of the display 212 as input information, so that the first security unit 222A controls the peripheral hardware 231 to stop starting or wait to start.

For another example, it is considered that when there is no person in front of the display 212 of the terminal for a long time, it may indicate that the user does not need to use the peripheral hardware 231 of the terminal. Therefore, a proximity sensor disposed on the display 212 may detect a return signal of a signal sent within specific duration, and use detection information as input information, so that the first security unit 222A controls the peripheral hardware 231 to stop starting or wait to start.

In Embodiment 7, in a process of controlling the peripheral module 23, the first security unit 222A further communicates with the AP, so that the AP may learn of a status of the peripheral module 23 from the first security unit 222A. Certainly, the button module 211 may be further communicatively connected to the AP, and an interface that is in the processing module 22 and that is configured to output the control signal may also be communicatively connected to the AP, so that the AP may learn of the status of the peripheral module 23 from the button module 211 and/or the interface configured to output the control signal. This is not specifically limited herein.

It is considered that when the button module 211 is communicatively connected to both the AP and the first security unit 222A, the third-party app running on the AP may be connected to the first security unit 222A by using a branch between the button module 211 and the AP and a branch between the button module 211 and the first security unit 222A, to unauthorizedly invoke the button module 211 or tamper with the input information received by the button module 211, causing abnormal control of the peripheral module 23, and leakage of the user data generated by the peripheral module 23.

Therefore, in Embodiment 7, a protection module 213 is further disposed between the button module 211 and the AP, and no protection module 213 needs to be disposed between the button module 211 and the first security unit 222A. The protection module 213 may prevent the third-party app from unauthorizedly accessing the first security unit 222A or tampering with the input information received by the button module 211.

It may be understood that, in Embodiment 7, a structure of the protection module 213 is not limited, provided that the protection module 213 can implement a corresponding function.

For example, the protection module 213 may include a resistor unit. The resistor unit may allow a voltage between the button module 211 and the AP to differ from a voltage between the button module 211 and the first security unit 222A, that is, a level of an interface that is in the first security unit 222A and that is configured to connect to the button module 211 is different from a level of an interface that is in the AP and that is configured to connect to the button module 211. This can prevent the interface that is in the first security unit 222A and that is configured to connect to the button module 211 from receiving information sent by the third-party app. Therefore, this can defend against unauthorized access or tampering by the third-party app.

For another example, the protection module 213 may include a diode. Due to unidirectional conduction, the diode can prevent the third-party app from sending information to the interface that is in the first security unit 222A and that is configured to connect to the button module 211. Therefore, this can defend against unauthorized access or tampering by the third-party app.

### Embodiment 8

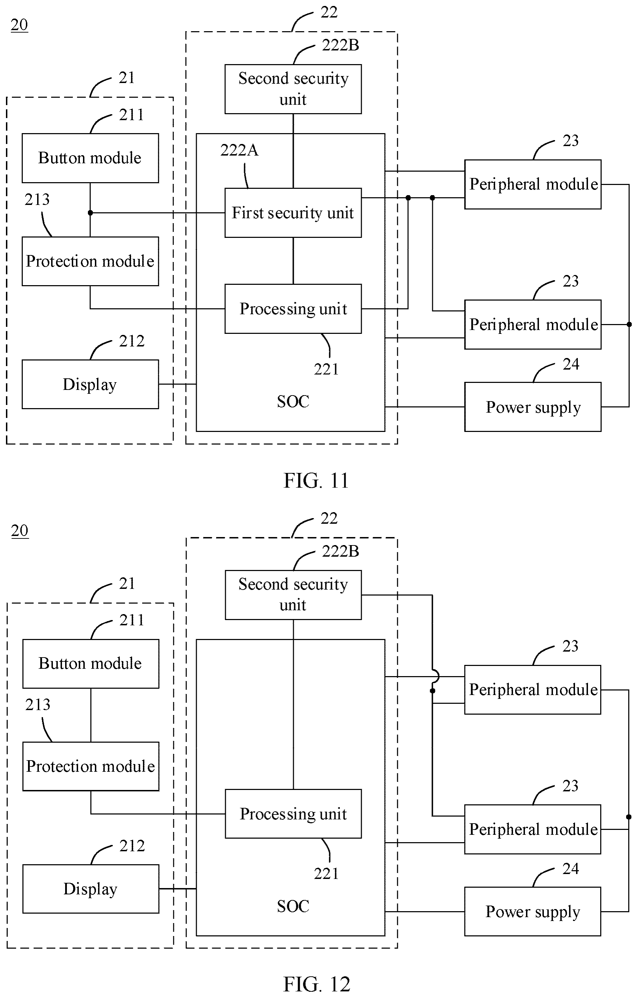

FIG. 11 is a diagram of a peripheral system 20 of a terminal according to Embodiment 8. A processing module 22 includes a processing unit 221 and a hardware security unit 222.

A main difference of Embodiment 8 from Embodiment 7 lies in that, the hardware security unit 222 in Embodiment 8 includes a first security unit 222A and a second security unit 222B. The processing unit 221 and the first security unit 222A are integrated into a SOC, and the second security unit 222B is disposed outside the SOC and is connected to the first security unit 222A.

The second security unit 222B may be a secure element SE in the terminal. The SE, an input module 21, the processing unit 221, the first security unit 222A, and another part of the peripheral system 20, refer to the descriptions in Embodiment 7. Details are not described herein again.

It may be understood that the second security unit 222B may be configured to securely store sensitive information, and other hardware or apps cannot actively access and obtain information in the second security unit 222B. Therefore, in Embodiment 8, the second security unit 222B may securely provide sensitive information for the first security unit 222A. It may be understood that, because the second security unit 222B is an independent component outside the SOC, physical (that is, hardware) independence of the second security unit 222B is higher than that of the first security unit 222A. Therefore, in comparison with Embodiment 7, in Embodiment 8, the first security unit 222A and the second security unit 222B are disposed, enhancing hardware security protection.

### Embodiment 9

FIG. 12 is a diagram of a peripheral system 20 of a terminal according to Embodiment 9. A processing module 22 includes a processing unit 221 and a hardware security unit 222.

A main difference of Embodiment 9 from Embodiment 7 lies in that, the hardware security unit 222 in Embodiment 9 includes a second security unit 222B. The processing unit 221 is integrated into a SOC, and the second security unit 222B is disposed outside the SOC.

The second security unit 222B may be a secure element SE in the terminal. The SE, an input module 21, the processing unit 221, a peripheral module 23, and another part of the peripheral system 20, refer to the descriptions in Embodiment 7. Details are not described herein again.

It may be understood that the second security unit 222B may be configured to securely store sensitive information and perform a secure operation on the sensitive information. In addition, other hardware or apps cannot actively access and obtain information in the second security unit 222B. It can be learned that an operating process and a function of the second security unit 222B are similar to those of the first security unit in Embodiment 7.

The second security unit 222B is connected to the processing unit 221 and the peripheral module 23. The input module 21 is connected to the processing unit 221. Therefore, the input module 21 is configured to receive input information and transmit the input information to the processing unit 221, the processing unit 221 further transmits the input information to the second security unit 222B, and then the second security unit 222B generates a control signal for the peripheral module 23 based on the input information.

It may be understood that the input information passes through the processing unit 221 and may be tampered with by a third-party app. Therefore, similar to Embodiment 7, the second security unit 222B may perform authentication on the input information, to ensure security. After authentication succeeds, the second security unit 222B generates the control signal based on the input information. Certainly, in another implementation, the input module 21 may alternatively be connected to the second security unit 222B, and transmit the input information to the second security unit 222B. For details, refer to the detailed description of the first security unit 222A in Embodiment 7. Details are not described herein again.

It may be understood that, because the second security unit 222B is an independent component outside the SOC, physical (that is, hardware) independence of the second security unit 222B is higher than that of the first security unit 222A in Embodiment 7. Therefore, in comparison with Embodiment 7, in Embodiment 9, the second security unit 222B is disposed, further enhancing a hardware security protection level.

In conclusion, according to the terminal and the peripheral system thereof provided in embodiments of this application, the hardware can be used to effectively prevent the third-party app from bypassing software protection to unauthorizedly access or invoke the peripheral module, to avoid leakage of the personal privacy information (including the sensitive information stored in the hardware security unit and the user data generated by the peripheral module).

In comparison with a common pure-software protection solution, in embodiments of this application, the terminal and the peripheral system thereof can avoid the leakage of the personal privacy information caused by security software vulnerability, and therefore can protect the personal privacy information more effectively. In addition, in embodiments of this application, the terminal and the peripheral system thereof can implement hardware-level security protection. In addition, an untrusted user (namely, a user without permission) can be prevented from using the hardware device in the terminal. Therefore, the security level is higher.

In addition, in the terminal and the peripheral system thereof in embodiments of this application, security protection for the peripheral module is simpler and easier to implement. There is no need for frequent interaction with a peripheral driver in the common pure-software protection solution, in which an authentication manner is complex. Therefore, the terminal and the peripheral system thereof provided in embodiments of this application may be applicable to a wider scope.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A peripheral system of a terminal, wherein the peripheral system comprises an input module, a processing module, and a plurality of peripheral modules, the input module is connected to the processing module, the input module is configured to receive input information and transmit the input information to the processing module, the processing module is connected to the plurality of peripheral modules, the processing module comprises a hardware security unit, and the hardware security unit is configured to: receive the input information and output a control signal corresponding to the input information to a part or all of the peripheral modules, to control communication statuses, power supply statuses, and/or startup statuses of the part or all of the peripheral modules.

2. The peripheral system according to claim 1, wherein at least one of the peripheral modules comprises peripheral hardware and a protection switch, the protection switch is connected between the peripheral hardware and the processing module, and the hardware security unit is connected to the protection switch and is configured to output the control signal to the protection switch, to control a communication status of the peripheral hardware by controlling an on/off state of the protection switch.

3. The peripheral system according to claim 2, wherein each protection switch is connected to at least two pieces of peripheral hardware of a same type.

4. The peripheral system according to claim 1, wherein the peripheral system further comprises a power supply, and the power supply is connected to the processing module and the plurality of peripheral modules, to supply power to the processing module and the plurality of peripheral modules; and
at least one of the peripheral modules comprises peripheral hardware and a protection switch, the protection switch is connected between the peripheral hardware and the power supply, and the hardware security unit is connected to the protection switch and is configured to output the control signal to the protection switch, to control a power supply status of the peripheral hardware by controlling an on/off state of the protection switch.

5. The peripheral system according to claim 1, wherein the peripheral system further comprises a first power supply and a second power supply, the first power supply is connected to the processing module and is configured to supply power to the processing module, the second power supply is connected to the plurality of peripheral modules and the hardware security unit, the second power supply is configured to supply power to the plurality of peripheral modules, and the hardware security unit is configured to output the control signal to the second power supply, to control power supply statuses of the peripheral modules by controlling operation of the second power supply.

6. The peripheral system according to claim 1, wherein the processing module has an enable interface and/or a reset interface, at least one of the peripheral modules is connected to the enable interface and/or the reset interface, and the hardware security unit is configured to output the control signal to the peripheral module through the enable interface or the reset interface, to control a startup status of the peripheral module.

7. The peripheral system according to claim 1, wherein the processing module further comprises a processing unit configured to process data of the plurality of peripheral modules; and the hardware security unit comprises a first security unit, the first security unit is connected to the processing unit and is integrated with the processing unit into a system on chip SOC, and the first security unit is configured to output the control signal to the part or all of the peripheral modules.

8. The peripheral system according to claim 7, wherein the hardware security unit further comprises a second security unit, and the second security unit is disposed outside the SOC and is connected to the first security unit.

9. The peripheral system according to claim 8, wherein the first security unit is a trusted execution environment TEE or a processor in the SOC, and the second security unit is a secure element SE.

10. The peripheral system according to claim 1, wherein the processing module further comprises a processing unit configured to process data of the plurality of peripheral modules, the processing unit is integrated into a system on chip SOC, the hardware security unit comprises a second security unit, the second security unit is disposed outside the SOC and is connected to the processing unit, and the second security unit is configured to output the control signal to the part or all of the peripheral modules.

11. The peripheral system according to claim 1, wherein the input module comprises a button module, and a display, a keyboard, a mouse, and/or a microphone that are equipped with sensors.

12. A terminal, wherein the terminal comprises the peripheral system according to any one of claims 1 to 11.
